# EUROPEAN PATENT SPECIFICATION

(11) **EP 3 028 853 B1**
(45) Date of publication and mention of the grant of the patent: **03.10.2018**
(21) Application number: 15197847.5
(22) Date of filing: 03.12.2015
(51) Int. Cl.: B32B 27/08, B32B 27/36, A01G 9/02, B65D 85/52, A01G 9/029, A01G 9/04, B32B 27/18, B32B 27/20, B32B 1/02, B32B 3/26, B32B 3/28, A01G 9/033

(54) **A THERMOFORMED MULTILAYER CONTAINER FOR HORTICULTURE COMPRISING A LAYER OF RECYCLED PET**
MEHRSCHICHTIGER THERMOGEFORMTER BEHÄLTER FÜR GARTENBAU ENTHALTEND EINE SCHICHT AUS WIEDERVERWENDETEM PET
RÉCIPIENT THERMOFORMÉ MULTICOUCHES POUR HORTICULTURE COMPRENANT UNE COUCHE DE PET RECYCLÉ

(30) Priority: 05.12.2014 IT MI20142099
(43) Date of publication of application: 08.06.2016
(73) Proprietor: I.L.P.A. S.p.A., 40053 Valsamoggia (BO) (IT)
(72) Inventor: GARAVAGLIA, Luigi, 40053 Valsamoggia (BO) (IT); BIGNAMI, Filippo, 40053 Valsamoggia (BO) (IT); PIANESANI, Riccardo, 40053 Valsamoggia (BO) (IT)
(74) Representative: Zambardino, Umberto

(56) References cited:
- EP-A- 0 441 422
- EP-A1- 0 785 067
- EP-A1- 1 782 947
- WO-A1-2013/086021
- US-A1- 2001 008 240
- US-A1- 2005 214 489

## Description

### Field of application

According to its general aspect, the present invention concerns the technical sector of the horticulture.

In particular, the invention concerns containers in compact thermoformed plastics used in horticulture as pots, flowerpot stands, multi-cell trays, containment cavities and trays for numerous applications as sowing, cultivation and transport of plants.

The present invention also concerns the use of said containers in the horticulture sector as a plant germination tray.

Moreover, the present invention concerns a process for producing said containers.

### State of the art

Seed propagation is a natural way of reproduction of higher plants and, consequently, it represents a way of propagation used by the enterprises of the horticultural sector in order to allow the following employment by the professional or amateur user of the plants.

Alongside the traditional sowing in the open ground of seeds is the sowing technique in a container in a protected environment.

For this aim, the use of containers in compact thermoformed plastics is widespread, for example germination trays or "plateau" with containment cavities, which can be laid down directly on the floor of the greenhouse or on pre-arranged pallet, or other cultivation systems. The seeds can be put by hands or mechanically into the containment cavities of said germination trays or plateaux; in particular, the employment of pneumatic seed drills can be envisaged for small-medium seeds. Then, the newborn seedling are transplanted into transplant trays with wider spacing or, more frequently, into single pots in which they start to grow, and/or in transportation trays.

It is known that containers for the above mentioned applications are essentially made of polystyrene, as inferred e.g. from the patent application EP 0 441 422 A1, or compact polypropylene; in some cases, said containers are made of sintered expanded polystyrene.

They are normally produced with strengthening geometries and grooves, made to allow said containers to resist to mechanical stress caused by filling and transportation operations. Furthermore, they are provided with suitable perforations and grooves for the drainage of irrigation water so as to avoid stagnation of water which would cause root rottenness.

The employment of the plastic materials indicated above also allows to provide the containers made of them with adequate characteristics of thermal resistance thereby preventing deformation of their structure, for example as a consequence of the exposition to adverse climatic conditions and/or to relatively high temperatures.

Although the above containers are well satisfactory from the functional point of view, they are however made of plastic materials, as those above mentioned, which come from industrial recycling sources usually containing substances different from the prevalent polymer, heavy metals and contaminants which can have a negative impact on the environment.

So, it is deemed necessary to realize containers - suitable for the use in horticulture - with a plastics feedstock as free of contaminants as possible, recycled, further recyclable itself and of wide availability in order to significantly reduce the environmental impact of these products, as well as their production costs.

It is known that polyethylene terephthalate (PET) is a recyclable plastics material for which an efficient separate waste collection network of post-consumer bottles (r-PET) exists and for which processing technologies capable to employ recycled PET coming from processing swarfs of generic or of the most diverse industrial processes or from post-consumer articles also exist. In addition, after washing, selection and screening operations, recycled PET (r-PET) normally shows a low content of polymeric and/or metallic contaminants.

Therefore, it has been thought to make containers for horticulture using as feedstock recycled PET (r-PET) - coming from the production chain of plastic materials recycling - which is recyclable itself.

However, the containers made of compact thermoformed plastic thereby produced disadvantageously show insufficient heat-resistance properties mainly because recycled PET has a glass transition temperature (Tg) comprised between 70-80°C and - at the same time - it has a relatively low softening point (about 65-70°C).

Consequently, when such a type of containers are exposed during the use to relatively high temperatures, close to the softening point, which can occur inside greenhouses, plant nurseries and/or during the storage and/or during the transport of plants, they are exposed to more or less strong softening phenomena of the plastic material of which are constituted, with following irreversible deformations of the container.

So, such a deformations threaten an effective use of said containers causing, for example, obstructions of the draining holes arranged on the bottom of the containment cavities, or deformations which make them not longer usable.

The patent application EP 0 785 067 A1 describes multilayer foils comprising a base layer comprising a polyester thermoplastic resin (A) having a glass transition temperature not less than 80°C and a sealing layer comprising a thermoplastic resin (B) having a glass transition temperature of at least 5°C less than the one of the base layer, the sealing layer being laminated on at least one side of the base layer.

The thermoplastic resin (A) of the base layer comprises polyethylene naphthalate or a copolymer thereof. The thermoplastic resin of the sealing layer is constituted by co-polyesters containing naphthalene dicarboxylic acid, in particular a blend of polyethylene naphthalate and a co-polymer of polyethylene terephthalate (PET). On its turn, the patent application EP 1 782 947 A1 describes multilayer sheets comprising an inner layer constituted by a blend of a copolymer of PET and polycarbonate enclosed between two external layers of a mixture of PET and polycarbonate.

However, said documents not only do not concern the production of containers for horticulture but, among other things, the employment of plastic materials coming from recycled material is not envisaged as a feedstock for the production of them.

US 2005/0214489 describes a multilayer sheet comprising an aliphatic co-polyester layer and at least a layer of a thermoplastic resin, for example, PET. A multilayer sheet of this type with three layers, wherein the intermediate layer is made of aliphatic co-polyester, can be used to form a container, for example a bottle, through a blowing-draught procedure.

Therefore, the technical problem on which the present invention is based is that of making available a container for horticulture made of compact thermoformed plastics, which can be produced using recycled PET (r-PET) as recyclable plastic feedstock and which can have suitable properties of thermal and mechanical resistance at the same time, in order to overcome the disadvantages previously mentioned with reference to the prior art.

### Summary of the invention

Such a technical problem is solved by a container for horticulture in compact thermoformed plastics comprising recycled PET (r-PET) having at least one perforated containment cavity and having a multilayer structure, said multilayer structure comprising at least one first layer of thermoplastic material, comprising a co-polyester having a glass transition temperature (Tg) greater than 95°C, as measured according to the procedure ASTM D3418-12, and at least a second layer of thermoplastic material, comprising recycled polyethylene terephthalate (r-PET), and wherein the outermost layer of said multilayer structure is constituted by said thermoplastic material comprising a co-polyester having a glass transition temperature (Tg) greater than 95°C.

Said technical problem is also solved by a process for the production of a container for horticulture as mentioned above. The process comprises the step of:
- coupling at least one first sheet of thermoplastic material, comprising a co-polyester having a glass transition temperature (Tg) greater than 95°C, as measured according to the procedure ASTM D3418-12, with at least one second sheet of thermoplastic material comprising recycled PET, through co-extrusion of said at least one first sheet and said at least one second sheet from an extrusion die, obtaining a multilayer foil;
- thermoforming said multilayer foil to obtain said container, having at least one containment cavity;
- perforating said at least one containment cavity.

According to a preferred embodiment, the container has a multilayer structure comprising two first layers, as defined above, between which a second layer as disclosed above is interposed as intermediate sheet, i.e. in a sandwich manner. According to the invention, the process for the production of said container comprises the steps of:
- coupling two first sheets of thermoplastic material, comprising a co-polyester having a glass transition temperature (Tg) greater than 95°C, as measured according to the procedure ASTM D3418-12, with a second sheet of thermoplastic material comprising recycled PET, so as to arrange said second sheet between said two first sheets through the co-extrusion of said two first sheets and said second sheet from an extrusion die, obtaining a multilayer foil;
- thermoforming said multilayer foil to obtain said container, having at least one containment cavity;
- perforating said at least one containment cavity.

The characteristics and vantages of the present invention are more evident from the hereinafter description of some preferred embodiments, said description being given with an indicative and not limiting way and with reference to the attached drawings.

### Brief description of the drawings

In the drawings:
- Figure 1 shows a prospective view of a container according to the invention in the form of a tray with a single containment cavity,
- Figure 2 shows a prospective view of a container according to the invention in the form of a tray provided with a plurality of containment cavities.

### Detailed description

In the container according to the invention, the co-polyester of the at least one first layer is constituted by any co-polymerized polyester having a glass transition temperature greater than 95°C, as measured according to the American Society for Testing and Materials (ASTM) procedure, standard test D3418 (2012) for the measurement of the transition temperatures and melting and crystallization enthalpies of polymers, by means of differential scanning calorimetry (DSC).

Preferably, said copolymerized polyester, having a glass transition temperature greater than 95°C, is constituted by a co-polyester of PET having the following MFR (melt flow rate) values:
- temperature: 200°C, MFR(₂₀₀₎: 1.2-1.5 g/10 min;
- temperature: 220°C, MFR₍₂₂₀₎: 4.0-3.5 g/10 min;
- temperature: 250 °C, MFR₍₂₅₀₎: 17.0-15.6 g/10 min;
- temperature: 260°C, MFR₍₂₆₀₎: 27.0-25.0 g/10 min;
(Conditions of the MFR test: the sample is pre-heated for about 3 minutes, the load exerts a pressure equal to 2.16 kgf on the piston)

Examples of preferred PET co-polyester for the use in the present invention are constituted by commercial products called HT 200K and HT600 of the firm Pointplastics and Akestra™ 90, 100,110 of Perstorp Society.

The recycled PET of the at least one second layer can have any composition and origin, for example it can come from processing swarfs of generic or of the most varied industrial processes or from post-consumer articles. Advantageously, the thermoplastic material constituting the at least one second layer can comprise further polymers blended with PET which can be intrinsically present in the recycled material because, for example, it could come from multilayered post-consumer manufactured articles (bottles, trays, films).

Such a polymers include - but they are not limited to - polyolefins, in particular EVA (ethylene-vinyl acetate), PE (polyethylene of various densities) and EVOH (ethylene vinyl alcohol).

Advantageously, the container according to the invention is colorless/transparent or lightly blued (a color coming from the recycled PET) or it has a predetermined color, preferably black obtained adding to the container at least one a dye agent, preferably in the form of a per se conventional masterbatch, used for the coloring of thermoplastic materials. Preferably, the at least one dye agent is constituted by a masterbatch of black color.

According to a preferred embodiment of the invention, the weight ratio between the weight of said at least one first layer and the weight of said at least one second layer ranges between 1:99 and 10:90, more preferably between 2.5:97.5 and 5:95.

As widely shown in the examples, it has been surprisingly found that containers produced according to the present invention show mechanical and thermal resistance characteristics, which are optimal for the use in horticulture applications. In particular, said containers are also particularly resistant to the relatively high temperatures, as such as temperatures greater than 65°C and up to 90°C, without being subjected to modifications and/or deformations in their structure. Such temperatures are widely representative of the more harsh environmental conditions to which said containers can be subjected both during the use in horticulture applications, for example in the open ground or in greenhouse, and during the storage in warehouse.

At the same time, the containers according to the invention also show a very limited environmental impact both because of an effective and quantitatively relevant employment of a recycled plastic material, such as PET, during the production thereof and because the containers according to the invention can be easily and almost entirely disposed of and recycled after their service life.

Therefore, the containers according to the invention brilliantly solve the above-mentioned technical problem, effectively solving the need to make a product with low environmental impact and having, at the same time, adequate mechanical and thermal resistance properties for the use in horticulture.

In this regard, the containers according to the invention are particularly suggested for the use as germination trays for plants.

Concerning the production process for the container according to the invention, it must be said that the obtainment of the at least one first sheet coextruded with said at least one second sheet can comprise the steps of:
- drying a co-polyester thermoplastic feedstock having a glass transition temperature (Tg) greater than 95°C, as measured according to the procedure ASTM D3418-12,
- feeding said dried thermoplastic feedstock to an extruder,
- melting said thermoplastic feedstock inside the extruder and feeding, preferably through a gear pump, the molten polymeric material to a diverter or distributor of an extrusion die,
- extruding said polymeric material from said extrusion die.

Preferably, the drying of said co-polyester thermoplastic feedstock having a glass transition temperature (Tg) greater than 95°C has been carried out at a temperature between 50°C and 90 °C and for a time between 5 and 10 hours, using per se conventional procedures and devices.

The feeding of said thermoplastic feedstock into the extruder, for example a single screw-extruder, can be carried out through proper per se conventional dispensers, arranged on the extruder.

Preferably, at least one per se known proper additive can be supplied by means of said dispensers, for the use in said extruder of thermoplastic materials. The at least one additive can be chosen in particular among de-blocking agents, slip agents, impact modifier agents and their combinations.

The de-blocking agents can comprise, for example, inorganic particles as silica, silicates or other mineral fillers which are able to modify the superficial adhesion (COF-coefficient of friction) of the plastic material, thereby promoting the winding process on a bobbin after the extrusion.

Similarly, slip agents, which can be for example particular types of primary or secondary amines such as erucylamide (amide of the unsaturated fatty acid with long chain 22:1 n-9, that is the amide of erucic acid or 13-docosenoic acid), allow to improve the sliding performances of the surfaces of the plastic material during the processing or of the finished product reducing the friction of the containers when they are stacked to each other or with eventual metallic parts of plants with which they come into contact during the use. The slip agents can therefore be used as an alternative to the blocking agents, too.

The impact modifier agents can be constituted by resins, for example Arkema Lotader Ax8900, a random terpolymer of ethylene, acrylic esters and glycil methacrylate, or as Kaneda Kane ACE B251 methyl methacrylate-butadiene-styrene copolymer, which is able to confer a superior resistance against impacts on the final container so as to increase its durability and integrity during the production and logistic cycle.

The melting of said thermoplastic feedstock, together with the additive or with the additives eventually added, is carried out by heating up to a temperature preferably comprised between 190°C and 300°C.

The melted material is then sent to the extrusion die though a specific feeding system (diverter or distributor) which provides also for its distribution in one or more sheets in order to be combined with a thermoplastic material sheet coming from another extruder and constituted by recycled PET.

The obtainment of said at least one second sheet, coextruded with said at least one first sheet, can comprise the following steps:
- feeding a thermoplastic feedstock of recycled PET to a single screw extruder,
- drying said thermoplastic feedstock of recycled PET;
- melting said thermoplastic feedstock inside the single screw extruder and feeding the molten polymeric material to a diverter or distributor of said extrusion die, preferably through a gear pump;
- extruding said molten polymeric material from said extrusion die.

Alternatively, the obtainment of said at least one second sheet, coextruded with said at least one first sheet, can comprise the following steps:
- feeding a thermoplastic feedstock of recycled PET to a twin screw extruder having a degassing unit working under vacuum,
- melting said thermoplastic feedstock inside the twin screw extruder and drying it by means of said degassing unit,
- feeding the dried molten polymeric material to a the diverter or distributor of said extrusion die, preferably through said gear pump;
- extruding said molten polymeric material from said extrusion die.

The supply of recycled PET to the single-screw extruder or to the twinscrew extruder can be done by means of specific dispensers, per se conventional, being arranged on the extruder.

Preferably, at least one additive can be also fed by means of said dispensers, being said additive per se known for the use in the extrusion of thermoplastic materials. In particular, said additives can be chosen among the group comprising impact modifier agents, intrinsic viscosity (IV) enhancing agents, for example Sukano Tme S606 chain extender, nucleating agents, for example talc, dye agents and combination thereof.

Advantageously, the dye agent can be constituted by a polymeric masterbatch having the desired color and is preferably added in percentages till 4-6% by weight on the weight of the recycled PET.

The recycled PET can have any composition and origin. For example, it can come from processing swarfs or from post-consumer articles. Advantageously, the recycled PET - fed to the extruder - is in the form of flakes or of a ground material or of a mixture of both. Moreover, recycled PET can comprise further polymers, in particular polyolefines, which can be intrinsically present in the recycled PET material used or can be components of the internal ground material coming from EVOH barrier multilayer trays.

The melting of said thermoplastic feedstock, together with the eventually added additive or additives, is carried out by heating up to a temperature preferably comprised between 250°C and 300°C.

The drying of the melted first thermoplastic feedstock can be carried out in a conventional manner and is preferably carried out by degassing under high vacuum conditions, in case of the supply of the thermoplastic material to a twin crew extruder provided with a degassing unit operating under vacuum. During said operations, a vacuum comprised between 40 mbar and 60 mbar is preferably applied.

The melted material is then sent to the extrusion die by means of a specific feeding system (distributor or diverter) which provides for its distribution in order to be extruded in form of at least one sheet of a thermoplastic material comprising recycled PET.

It should be noted that the processing of the plastic feedstock to be extruded in order to form the at least one first sheet and the at least one second sheet is carried out in separate extruders, supplied with the respective feedstocks, and the thermoplastic feedstocks - processed in the respective extruders - are then combined by extruding in a single extrusion die, which allows them to be maintained distinct and separated so as to form a multilayer structure.

In particular, the polymeric material coming from the respective extruder is transferred, preferably through a gear pump, to the diverter or distributor which allows to supply the common extruding die where are co-extruded and combined the at least one first sheet made of plastic material comprising co-polyester having a glass transition temperature (Tg) greater than 95°C - being in peripheral position - and the at least one second sheet in plastic material comprising recycled PET, the latter preferably being in central position.

According to a preferred embodiment of the invention, a second sheet of thermoplastic material comprising recycled PET is co-extruded between a couple of two said first sheets of plastic material comprising a co-polyester having a glass transition temperature (Tg) greater than 95°C, as measured according to the procedure ASTM D3418-12.

In said embodiment, the second sheet is extruded from the extrusion die in a substantially central position together with the two first sheets which are co-extruded from the same extrusion dye, in respective opposite peripheral positions with respect to the second sheet. This fact implies that the two first sheets are combined with the second sheet on the two opposite sides (or surfaces) of the second sheet, thereby obtaining a multilayer foil wherein the second sheet comprising recycled PET is comprised in sandwich manner between two first sheets of plastic material comprising a co-polyester having a glass transition temperature (Tg) greater than 95°C, as measured according to the procedure ASTM D3418-12.

Advantageously, the thermoplastic polymeric materials forming the respective sheets are coupled according to predetermined ratios in order to have a predetermined weight ratio between the weight of the at least one first sheet and the weight of the at least one second sheet in the multilayer foil obtained after the combination of the sheets.

Preferably, the weight ratio between the weight of the at least one first sheet and the weight of the at least one second sheet in the multilayer foil is comprised between 1:99 and 10:90, more preferably between 2.5:97.5 and 5:95.

Moreover, the multilayer foil is preferably obtained with a thickness comprised between 0.100 mm and 1.5 mm, more preferably can have a thickness comprised between 0.300 mm and 0.800 mm.

The multilayer foil obtained after the co-extrusion of the sheets is cooled, for example, by a sequential passage through the cylinders of a calender downstream the extrusion die of the extruder, and the cooled multilayer foil can be winded onto a bobbin, after the cut of the selvages in view of the subsequent use in the forming step.

At the end, the multilayer foil is formed in a per se conventional manner, so as to obtain a container according to the invention. Preferably, this step is carried out by thermoforming the multilayer foil at temperature higher than the softening temperature of recycled PET, in particular at a temperature between 120 and 140°C. The thermoforming operations can be carried out in sequence in a single mould or in several different moulds by specific conventional methods, for example, by vacuum suction, by injection of compressed air or by mechanical methods, etc.

Advantageously, the multilayer foil is thermoformed in order to produce a compact plastics container made of PET for horticulture, having at least one containment cavity and having a multilayer structure comprising at least one first layer of thermoplastic material comprising a co-polyester having a glass transition temperature (Tg) greater than 95°C, as measured according to the procedure ASTM D3418-12, and at least a second layer of thermoplastic material, comprising recycled polyethylene terephthalate (r-PET), and wherein the outermost layer of said multilayer structure is constituted by said thermoplastic material comprising a co-polyester having a glass transition temperature (Tg) greater than 95°C.

Subsequently, said container undergoes to a perforation operation so as to perforate the containment cavity, or the containment cavities, which constitute it, preferably in correspondence of the bottom of said containment cavity or cavities, thereby obtaining a container as described above and having at least one perforated containment cavity.

The perforation operation is usually carried out in conventional manner by appropriate perforation means, such as for example heated metallic needles, so as to preferably perforate the bottom of the container in correspondence with said containment cavities.

The perforation operation can be alternatively carried out before the thermoforming of the multilayer foil. In this way, the multilayer foil is firstly conventionally perforated by appropriate perforation means, such as for example heated metallic needles, and subsequently it is thermoformed so as to produce a PET container made of compact plastics for horticulture as described above, having thus at least one perforated containment cavity or, if necessary, a plurality of perforated containment cavities.

The container according to the invention can be produced with any geometry and can be provided with external and/or internal strengthening grooves according to the desired project specifications. In particular, the multilayer sheet can be thermoformed so as to obtain a container in form of a germination tray or of a plateau, or of a grow box and/or a of transportation tray.

Therefore, the container made of thermoformed and multilayer compact thermoplastic material according to the invention firstly and fully solves the problem associated to the reduction of the production costs, as well as to the reduction of the environmental impact for its production, thanks to the employment of recycled PET.

Moreover, as demonstrated in detail in the examples which follows, the container according to the invention efficiently meets the requirements of the conditions of use during high mechanical and environmental stress, typical of the use in horticulture, as shown before, both due to the specific composition of the layers of the multilayer foil constituting it, a first layer comprising recycled polyethylene terephthalate (r-PET) and a second layer comprising a polyethylene having a glass transition temperature (Tg) greater than 95°C, and due to the arrangement of the structure of the multilayer foil during the formation of the container with said second layer externally disposed with respect to said first layer.

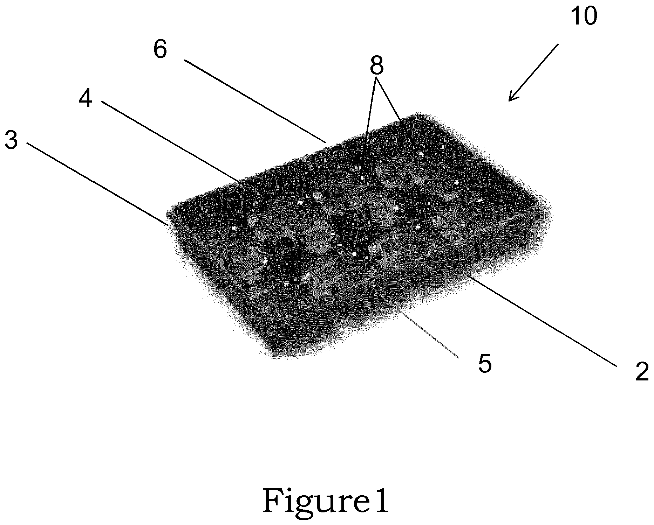

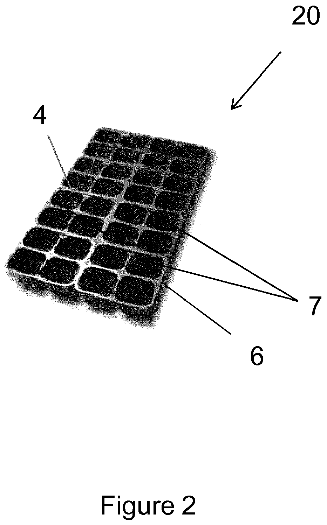

In figures 1-2 respective containers according to the invention which are globally indicated with the reference numbers 10 and 20, respectively, are shown.

Each container 10 or 20 is shaped substantially as a tray or as a box comprising a bottom 2, and side walls 3 provided with septa 4 and strengthening grooves 5, said side walls 3 ending with a peripheral rim 6. The container 10 has a single containment cavity 8 (or compartment) and can be used, for example, as a grow box and/or as a transportation tray. Differently, the container 20 has a plurality of distinct containment cavities 7 having a predetermined depth and can be used, for example, as a germination tray in which the seeds can be placed manually or mechanically by means of specific equipments. Furthermore, the containers 10 and 20 have each a plurality of perforations 8 manufactured on the bottom of the containment cavity or cavities for the drainage of irrigation water so as to avoid stagnation of water and related root rottenness.

### Examples

### Example 1

In accordance with the general procedure above described, a second sheet of thermoplastic material comprising recycled PET and a couple of first sheets of thermoplastic material comprising co-polyester having a glass transition temperature (Tg) greater than 95°C, as measured according to the procedure ASTM D3418-12, have been co-extruded together.

In particular, the second sheet has been obtained by continuously feeding to a twin central extruder a mixture of lightly blued recycled PET flakes, coming from the firm AMP (Ferrara), and a ground material of recycled PET produced internally, and a black masterbatch in a amount equivalent to 2% by weight on the weight of the mixture. The resulting mixture in the extruder has been melted at a temperature of 300°C and then continuously degassed by applying vacuum down to 40 mbar. The degassed melted material has been then subjected to extrusion from the extrusion die.

Each first sheet has been obtained by continuously feeding HT200K co-polyester of the firm Pointplastic to a single screw extruder having a diameter of 35 mm, drying said co-polyester at a temperature of 90°C for 10 hours and melting the dried co-polyester at a temperature of 280°C-290°C-295°C-295°C in the different areas of the extruder. The melted material has been then subjected to extrusion from the extrusion die.

The second sheet and the couple of first sheets have been co-extruded in said extrusion die with a total flow rate of 900 kg/h and distributing the extrusion polymeric material of the sheets so as to have a weight ratio between the two first sheets and the second sheet equal to 5:95 in the final multilayer foil, having the two first sheets substantially the same density.

The second sheet and the couple of the first sheets are coupled to each other by the above co-extrusion so as to connect the two first sheets on the two opposite sides of the second sheet, thereby obtaining a multilayer foil wherein the second sheet comprising recycled PET is comprised in a sandwich manner between two first sheets of thermoplastic material comprising a co-polyester having a glass transition temperature (Tg) greater than 95°C.

A multilayer foil - having a weight ratio between the weight of said couple of first sheets and the weight of said second sheet equal to 5/95 and a thickness between 480 micron and 510 micron - has been so obtained.

Then, the multilayer foil has been thermoformed at a temperature of 120-140°C so as to obtain a compact plastics container for horticulture, having a plurality of containment cavities, in particular a germination tray.

Subsequently, said germination tray has been subjected to a perforation operation so as to perforate, by means of appropriate heated metallic needles, the bottom of each containment cavity, thereby obtaining a container (a tray) having a plurality of perforated containment cavities.

This tray has several cavities depending on the type of containment cavity and on the sowing type to which is intended, being separated from appropriate septa which give mechanical reinforcement to the structure. The cavities are provided with perforations and grooves on the bottom so as to allow water drainage after irrigation and to avoid rottenness.

### Example 2

According to the general procedure described before and according to the same procedure adopted in the Example 1, a compact plastics container for horticulture has been produced, in particular a tray, with the difference that the second sheet and the couple of first sheets have been co-extruded by distributing the polymeric material forming the sheets so as to have a weight ratio between the two first sheets and the second sheet equal to 10:90 in the final multilayer foil, having the two first sheets substantially the same density.

### Example 3

According to the general procedure described before and according to the same procedure adopted in the Example 1, a compact plastics container for horticulture has been produced, in particular a tray, with the difference that each first layer has been produced by continuously feeding the co-polyester HT 600 of the firm Pointplastic to the related extruder.

### Example 4

According to the general procedure described before and according to the same procedure adopted in the Example 1, a compact plastics container for horticulture has been produced, in particular a tray, with the difference that each first layer has been produced by continuously feeding the co-polyester HT 600 to the related extruder and with the difference that the second sheet and the couple of first sheet have been coextruded by distributing the polymeric material for the extrusion of the sheets so as to have a weight ratio between the two first sheets and the second sheet equal to 10:90 in the final multi layer foil, having the two first sheets substantially the same density.

### Example 5

According to the general procedure described before and according to the same procedure adopted in the Example 1, a compact plastics container for horticulture has been produced, in particular a tray, with the difference that only one first layer has been produced by continuously feeding the co-polyester HT 600 to the related extruder and with the difference that the second sheet and the single first sheet have been coextruded by distributing the polymeric material for the extrusion of the sheets so as to have a weight ratio between the single first sheet and the second sheet equal to 5:95 in the final multi layer foil.

The containers produced according to the Examples 1-5 have been subjected to characterization tests with the aim to evaluate the real thermal resistance of the containers; in the same manner, also the foils-from which the containers have been obtained-have been subjected to a characterization test. Therefore, two kinds of tests have been carried out: a test in oven at 80°C during which the thermal stability of the containers has been tested, which means the mechanical properties associated to the thermal resistance, and a immersion test in hot water at 80°C during which the thermal stability has been tested, which means the mechanical properties associated to the thermal resistance, of the foils from which the containers have been obtained. This test has been deemed as necessary in order to determine, already in the extrusion step of the foils, the thermo-resistance of the multilayer structure and the correct distribution of the sheet thickness along the band of the foil, before the thermoforming step of the containers. A temperature equal to 80°C should be considered as widely representative for both the simulation of the environmental conditions to which said containers can be subjected and the use in horticulture applications, for example during the use in greenhouses, and during the storage in warehouse.

During the test in oven, the containers in exam have been placed in a Argolab/Salvislab TCF 50 oven, whose internal temperature has been previously raised to 80°C and maintained to this temperature for 30 minutes. At the end of this time period, the containers have been removed from the oven and have been observed visually in order to detect possible softening zones, structural failures, deformations and structural modifications.

During the immersion test, the foils in exam have been immersed/dipped into a thermostatic bath containing water at 80°C. The foils have been maintained immersed at the above mentioned temperature for 30 minutes. At the end of this time period, the foils have been removed from the bath and have been observed visually in order to detect possible softening zones, structural failures, deformations and structural modifications.

The results of the characterization test are reported in Table 1.

**Table 1**

| Example | | Structure A= first sheet B= second sheet | Weight ratios between first sheet/s and second sheet | Thickness | Stability of the foil immersed in water at 80°C | Stability of the container in oven at 80°C |
|---|---|---|---|---|---|---|
| Example 1 | Co-polyester HT200K | A/B/A | 2.5/95/2.5 | 480 micron | No softening zones | No* deformations |
| Example 2 | Co-polyester HT200K | A/B/A | 5/90/5 | 480 micron | No softening zones | No* deformations |
| Example 3 | Co-polyester HT 600 | A/B/A | 2.5/95/2.5 | 480 micron | No softening zones | No* deformations |
| Example 4 | Co-polyester HT 600 | A/B/A | 5/90/5 | 480 micron | No softening zones | No* deformations |
| Example 5 | Co-polyester HT 600 | A/B | 5/95 | 480 micron | No softening zones | No* deformations |

| | | | | | | |
|---|---|---|---|---|---|---|
| *deformations are less than the 1% with respect to the nominal dimensions before the test. | | | | | | |

Table 1 clearly shows that both the containers for horticulture made of recycled plastic material produced according to the invention and the related foils have mechanical properties, associated to the thermal resistance, suitable for the use. Indeed, all the containers, as well as the related foils produced according to the invention have passed with success all the characterization tests to which they have been subjected. In particular, all the containers produced according to Examples 1-5 have proven to maintain unchanged the mechanical properties associated to the thermal resistance after the different treatments to which they have been subjected at a temperature equal to 80°C; indeed, none of the containers has shown structural modification phenomena, such as structural failures and/or deformations after the characterization test.

## Claims

1. Container for horticulture in compact thermoformed plastics comprising recycled PET (r-PET) having at least one perforated containment cavity and having a multilayer structure, said multilayer structure comprising at least one first layer of thermoplastic material, comprising a co-polyester having a glass transition temperature (Tg) greater than 95°C, as measured according to the procedure ASTM D3418-12, and at least a second layer of thermoplastic material, comprising recycled polyethylene terephthalate (r-PET), and wherein the outermost layer of said multilayer structure is constituted by said thermoplastic material comprising a co-polyester having a glass transition temperature (Tg) greater than 95°C.

2. Container according to claim 1, wherein said multilayer structure comprises two first layers of thermoplastic material, comprising co-polyester having a glass transition temperature (Tg) greater than 95°C, between which a second layer of thermoplastic material, comprising recycled polyethylene terephthalate (r-PET), is interposed as intermediate layer.

3. Container according to any one of the preceding claims, which further comprises at least one dye, preferably of black color.

4. Container according to any one of the preceding claims, wherein said at least one first layer and said at least one second layer have a weight ratio comprised between 1:99 and 10:90, preferably between 2.5:97.5 and 5:95.

5. Use of a container according to any one of the preceding claims for horticulture, preferably as a plant containment and germination tray.

6. Process for the production of a container for horticulture according to any one of claims 1 to 4, comprising the steps of:
- coupling at least one first sheet of thermoplastic material, comprising a co-polyester having a glass transition temperature (Tg) greater than 95°C, as measured according to the procedure ASTM D3418-12, with at least one second sheet of thermoplastic material comprising recycled PET through co-extrusion of said at least one first sheet and said at least one second sheet from an extrusion die, obtaining a multilayer foil;
- thermoforming said multilayer foil to obtain said container, having at least one containment cavity;
- perforating said at least one containment cavity.

7. Process for the production of said container according to any one of claims from 2 to 4, comprising the steps of:
- coupling two first sheets of thermoplastic material, comprising a co-polyester having a glass transition temperature (Tg) greater than 95°C, as measured according to the procedure ASTM D3418-12, with a second sheet of thermoplastic material comprising recycled PET, so as to arrange said second sheet between said two first sheets through co-extrusion of said two first sheets and said second sheet from an extrusion die, obtaining a multilayer foil;
- thermoforming said multilayer foil to obtain said container, having at least one containment cavity;
- perforating said at least one containment cavity.

8. Process according to claims 6 or 7, wherein the obtainment of said at least one first sheet co-extruded with said at least one second sheet comprises the steps of:
- drying a co-polyester thermoplastic feedstock having a glass transition temperature (Tg) greater than 95°C,
- feeding said dried thermoplastic feedstock to an extruder,
- melting said thermoplastic feedstock inside the extruder and feeding, preferably through a gear pump, the molten polymeric material to a diverter or distributor of an extrusion die,
- extruding said molten polymeric material from said extrusion die.

9. Process according to claim 8, wherein during said feeding step the extruder is also fed with at least one additive chosen among de-blocking agents, slip agents, impact modifier agents and combinations thereof.

10. Process according to any one of claims from 6 to 9, wherein the obtainment of said at least one second sheet, co-extruded with said at least one first sheet, comprises the following steps:
- feeding a thermoplastic feedstock of recycled PET to a single screw extruder,
- drying said thermoplastic feedstock of recycled PET,
- melting said thermoplastic feedstock inside the single screw extruder and feeding, preferably through a gear pump, the molten polymeric material to a diverter or distributor of said extrusion die,
- extruding said molten polymeric material from said extrusion die.

11. Process according to any one of claims from 6 to 9, wherein the obtainment of said at least one second sheet, co-extruded with said at least one first sheet, comprises the following steps:
- feeding a thermoplastic feedstock of recycled PET to a twin screw extruder having a degassing unit operating under vacuum,
- melting said thermoplastic feedstock inside the twin screw extruder and drying it by means of said degassing unit,
- feeding the degassed molten polymeric material, preferably through said gear pump, to a diverter or distributor of said extrusion die,
- extruding said molten polymeric material from said extrusion die.

12. Process according to claims 10 or 11, wherein in said feeding step the extruder is also fed with at least one additive chosen among impact modifier agents, intrinsic viscosity (IV) enhancing agents, nucleating agents, preferably talc, dye agents and combination thereof.

13. Process according to claim 11, wherein the dye agent is constituted by a polymeric masterbatch, added preferably in percentages till 6% by weight on the weight of recycled PET.

14. Process according to any one of claims from 6 to 13, wherein said multilayer foil is obtained with a thickness comprised between 0.100 mm and 1.5 mm.

## Patentansprüche

1. Behälter für die Gartenkultur in kompakt thermogeformten Kunststoffen, die recyceltes PET (r-PET) aufweisen, mit mindestens einem perforierten Aufnahmeraum und mit einer Mehrschichtstruktur, wobei die genannte Mehrschichtstruktur mindestens eine erste Schicht aus thermoplastischem Material, das einen Co-Polyester mit einer Glasübergangstemperatur (Tg) grösser 95°C, gemessen nach der Vorschrift ASTM D3418 -12, aufweist und mindestens eine zweite Schicht aus thermoplastischem Material aufweist, das recyceltes Polyethylenterephthalat (r-PET) umfasst, und wobei die äußerste Schicht der Mehrschichtstruktur durch das genannte thermoplastische Material gebildet ist, das einen Co-Polyester mit einer Glasübergangstemperatur (Tg) grösser 95°C aufweist.

2. Behälter nach Anspruch 1, wobei die genannte Mehrschichtstruktur zwei erste Schichten aus thermoplastischem Material umfasst, das Co-Polyester mit einer Glasübergangstemperatur (Tg) grösser als 95°C aufweist, zwischen denen eine zweite Schicht aus thermoplastischem Material, das recyceltes Polyethylenterephthalat (r-PET) aufweist, als Zwischenschicht zwischengefügt ist.

3. Behälter nach einem beliebigen der vorhergehenden Ansprüche, der ferner mindestens einen Farbstoff, vorzugsweise von schwarzer Farbe, umfasst.

4. Behälter nach einem beliebigen der vorhergehenden Ansprüche, wobei die genannte mindestens eine erste Schicht und die genannte mindestens eine zweite Schicht ein Gewichtsverhältnis aufweisen, das zwischen 1 : 99 und 10 : 90, vorzugsweise zwischen 2,5 : 97,5 und 5 : 95 liegt.

5. Verwendung eines Behälters nach einem der vorhergehenden Ansprüche für die Gartenkultur, vorzugsweise als Pflanzenbehälter und als Keimungsschale.

6. Verfahren für die Herstellung eines Behälters für die Gartenkultur nach einem beliebigen der Ansprüche 1 bis 4, das die folgenden Schritte aufweist:
- Koppeln wenigstens einer ersten Folie aus thermoplastischem Material, das einen Co-Polyester mit einer Glasübergangstemperatur (Tg) grösser als 95°C, gemessen nach der Vorschrift ASTM D3418 -12, aufweist, mit mindestens einer zweiten Folie aus thermoplastischem Material, das recyceltes PET aufweist, durch Co-Extrusion der genannten mindestens einen ersten Folie und der genannten mindestens einen zweiten Folie aus einem Extrusionswerkzeug unter Erhalt einer Mehrschichtfolie;
- Thermoformen der genannten Mehrschichtfolie, um den genannten Behälter zu erhalten, der mindestens einen Aufnahmeraum aufweist;
- Perforieren des genannten mindestens einen Aufnahmeraums.

7. Verfahren für die Herstellung des genannten Behälters nach einem beliebigen der Ansprüche 2 bis 4, das die folgenden Schritte aufweist:
- Koppeln von zwei ersten Folien aus thermoplastischem Material, das einen Co-Polyester mit einer Glasübergangstemperatur (Tg) grösser 95°C, gemessen nach der Vorschrift ASTM D3418 -12, aufweist, mit einer zweiten Folie aus thermoplastischem Material, das recyceltes PET aufweist, um die genannte zweite Folie zwischen den genannten beiden ersten Folien durch Co-Extrusion der genannten zwei ersten Folien und der genannten zweiten Folie aus einem Extrusionswerkzeug anzuordnen unter Erhalt einer Mehrschichtfolie;
- Thermoformen der genannten Mehrschichtfolie, um den genannten Behälter zu erhalten, der mindestens einen Aufnahmeraum hat;
- Perforieren des genannten mindestens einen Aufnahmeraums.

8. Verfahren nach Anspruch 6 oder 7, wobei die Gewinnung der genannten mindestens einen Folie, die mit der genannten mindestens einen zweiten Folie co-extrudiert ist, die folgenden Schritte aufweist:
- Trocknen eines thermoplastischen Co-Polyester Ausgangsmaterials mit einer Glasübergangstemperatur (Tg) von mehr als 95°C,
- Zuführen des genannten getrockneten thermoplastischen Ausgangsmaterials zu einem Extruder,
- Aufschmelzen des genannten thermoplastischen Ausgangsmaterials innerhalb des Extruders und Zuführen, vorzugsweise mittels einer Zahnradpumpe, des geschmolzenen Polymermaterials zu einem Diverter oder einem Verteiler eines Extrusionswerkzeugs,
- Extrudieren des genannten geschmolzenen Polymermaterials aus dem genannten Extrusionswerkzeug.

9. Verfahren nach Anspruch 8, wobei während des genannten Schrittes des Zuführens der Extruder ferner mit mindestens einem Additiv gespeist wird, das unter den Deblockierungsmitteln, Gleitmitteln, Mitteln zur Schlagzähigkeitsmodifikation und Kombinationen davon ausgewählt ist.

10. Verfahren nach einem beliebigen der Ansprüche 6 bis 9, wobei die Gewinnung der genannten mindestens einen zweiten Folie, die mit der genannten mindestens einen ersten Folie co-extrudiert wird, die folgenden Schritte aufweist:
- Zuführen eines thermoplastischen Ausgangsmaterials an recyceltem PET zu einem Einschneckenextruder,
- Trocknen des genannten thermoplastischen Ausgangsmaterials an recyceltem PET,
- Aufschmelzen des genannten thermoplastischen Ausgangsmaterials innerhalb des Einschneckenextruders und Zuführen, vorzugsweise mittels einer Zahnradpumpe, des geschmolzenen Polymermaterials zu einem Diverter oder Verteiler des Extrusionswerkzeugs,
- Extrudieren des genannten geschmolzenen Polymermaterials aus dem genannten Extrusionswerkzeug.

11. Verfahren nach einem beliebigen der Ansprüche 6 bis 9, wobei die Gewinnung der genannten mindestens einen zweiten Folie, die mit der genannten mindestens einen ersten Folie co-extrudiert wird, die folgenden Schritte umfasst:
- Zuführen eines thermoplastischen Ausgangsmaterials an recyceltem PET zu einem Doppelschneckenextruder, der eine Entgasungseinheit aufweist, die unter Vakuum arbeitet,
- Aufschmelzen des genannten thermoplastischen Ausgangsmaterials innerhalb des Doppelschneckenextruders und Trocknen mittels der genannten Entgasungseinheit,
- Zuführen des entgasten geschmolzenen Polymermaterials, vorzugsweise durch die genannte Zahnradpumpe, zu einem Diverter oder einem Verteiler des genannten Extrusionswerkzeugs,
- Extrudieren des genannten geschmolzenen Polymermaterials aus dem genannten Extrusionswerkzeug.

12. Verfahren nach Anspruch 10 oder 11, wobei in dem genannten Schritt des Zuführens der Extruder außerdem mit mindestens einem Additiv, ausgewählt aus Mitteln zur Schlagzähigkeitsmodifikation, Mitteln zur Steigerung der intrinsischen Viskosität (IV), Mittel zur Keimbildung, vorzugsweise Talkum, Färbemittel und deren Kombination, gespeist wird.

13. Verfahren nach Anspruch 11, wobei das Färbemittel durch ein polymeres Kunststoffadditiv (masterbatch) gebildet wird, das vorzugsweise in Prozentschritten bis 6 Gew.-%, bezogen auf das Gewicht des recycelten PET, zugegeben wird.

14. Verfahren nach einem beliebigen der Ansprüche 6 bis 13, wobei die genannte Mehrschichtfolie mit einer Dicke, die zwischen 0,100 mm und 1,5 mm liegt, erhalten wird.

## Revendications

1. Récipient pour l'horticulture dans des produits en plastique thermoformés compacts comprenant du PET recyclé (r-PET) ayant au moins une cavité de réception perforée et ayant une structure multicouche, ladite structure multicouche comprenant au moins une première couche de matériau thermoplastique, comprenant un co-polyester ayant une température de transition vitreuse (Tg) supérieure à 95°C, telle que mesurée selon la procédure ASTM D3418-12, et au moins une deuxième couche de matériau thermoplastique, comprenant du polyéthylène téréphtalate recyclé (r-PET), la couche la plus à l'extérieur de ladite structure multicouche étant constituée par ledit matériau thermoplastique comprenant un co-polyester ayant une température de transition vitreuse (Tg) supérieure à 95°C.

2. Récipient selon la revendication 1, dans lequel ladite structure multicouche comprend deux premières couches de matériau thermoplastique, comprenant un co-polyester ayant une température de transition vitreuse (Tg) supérieure à 95°C, entre lesquelles est interposée une deuxième couche de matériau thermoplastique, comprenant du polyéthylène téréphtalate recyclé (r-PET), en tant que couche intermédiaire.

3. Récipient selon l'une quelconque des revendications précédentes, qui comprend en outre au moins un colorant, de préférence de couleur noire.

4. Récipient selon l'une quelconque des revendications précédentes, dans lequel ladite au moins une première couche et ladite au moins une deuxième couche ont un rapport pondéral compris entre 1:99 et 10:90 ; de préférence entre 2,5:97,5 et 5:95.

5. Utilisation d'un récipient selon l'une quelconque des revendications précédentes pour l'horticulture, de préférence en tant que bac de réception de plantes et plateau de germination.

6. Procédé de fabrication d'un récipient pour l'horticulture selon l'une quelconque des revendications 1 à 4, comprenant les étapes consistant à :
- relier au moins une première feuille de matériau thermoplastique, comprenant un co-polyester ayant une température de transition vitreuse (Tg) supérieure à 95°C, telle que mesurée selon la procédure ASTM 03418-12, avec au moins une deuxième feuille de matériau thermoplastique comprenant du PET recyclé par coextrusion de ladite au moins une première feuille et de ladite au moins une deuxième feuille à partir d'une filière d'extrusion, pour obtenir une feuille multicouche ;
- thermoformer ladite feuille multicouche pour obtenir ledit récipient, comportant au moins une cavité de réception ;
- perforer ladite au moins une cavité de réception.

7. Procédé de fabrication dudit récipient selon l'une quelconque des revendications 2 à 4, comprenant les étapes consistant à :
- relier deux premières feuilles de matériau thermoplastique, comprenant un co-polyester ayant une température de transition vitreuse (Tg) supérieure à 95°C ; telle que mesurée selon la procédure ASTM D3418-12, avec une deuxième feuille de matériau thermoplastique comprenant du PET recyclé, de manière à disposer ladite deuxième feuille entre lesdites deux premières feuilles par coextrusion desdites deux premières feuilles et de ladite deuxième feuille au moyen d'une filière d'extrusion, pour obtenir une feuille multicouche ;
- thermoformer ladite feuille multicouche pour obtenir ledit récipient, comportant au moins une cavité de réception ;
- perforer ladite au moins une cavité de réception.

8. Procédé selon les revendications 6 ou 7, dans lequel l'obtention de ladite au moins une première feuille co-extrudée avec ladite au moins une deuxième feuille comprend les étapes consistant à :
- sécher une charge thermoplastique co-polyester ayant une température de transition vitreuse (Tg) supérieure à 95°C,
- alimenter ladite charge thermoplastique séchée dans une extrudeuse,
- faire fondre ladite charge thermoplastique à l'intérieur de l'extrudeuse et alimenter, de préférence au moyen d'une pompe à engrenages, la matière polymère fondue à un déflecteur ou distributeur d'une filière d'extrusion,
- extruder ledit matériau polymère fondu depuis ladite filière d'extrusion.

9. Procédé selon la revendication 8, dans lequel, au cours de ladite étape d'alimentation, l'extrudeuse est également alimentée avec au moins un additif choisi parmi des agents de déblocage, des agents de glissement, des agents modificateurs d'impacts et les combinaisons de ceux-ci.

10. Procédé selon l'une quelconque des revendications 6 à 9, dans lequel l'obtention de ladite au moins une deuxième feuille, co-extrudée avec ladite au moins une première feuille, comprend les étapes suivantes :
- introduire une charge thermoplastique de PET recyclé dans une extrudeuse à vis unique,
- sécher ladite charge thermoplastique de PET recyclé,
- faire fondre ladite charge thermoplastique à l'intérieur de l'extrudeuse à vis unique et alimenter, de préférence au moyen d'une pompe à engrenages, la matière polymère fondue vers un déflecteur ou distributeur de ladite filière d'extrusion,
- extruder ledit matériau polymère fondu au moyen de ladite filière d'extrusion.

11. Procédé selon l'une quelconque des revendications 6 à 9, dans lequel l'obtention de ladite au moins une deuxième feuille ; co-extrudé avec ladite au moins une première feuille, comprend les étapes suivantes :
- introduire une charge thermoplastique de PET recyclé dans une extrudeuse à double vis ayant une unité de dégazage fonctionnant sous vide,
- faire fondre ladite charge thermoplastique à l'intérieur de l'extrudeuse à double vis et la sécher au moyen de ladite unité de dégazage,
- alimenter le matériau polymère fondu dégazé, de préférence au moyen de ladite pompe à engrenages, vers un déflecteur ou distributeur de ladite filière d'extrusion,
- extruder ledit matériau polymère fondu au moyen de ladite filière d'extrusion.

12. Procédé selon les revendications 10 ou 11, dans lequel, dans ladite étape d'alimentation, l'extrudeuse est également alimentée avec au moins un additif choisi parmi des agents modificateurs d'impacts, des agents améliorant la viscosité intrinsèque (IV), des agents de nucléation, de préférence le talc, des agents colorants et une combinaison de ceux-ci.

13. Procédé selon la revendication 11, dans lequel l'agent colorant est constitué par un mélange maître polymérique, ajouté de préférence en pourcentages allant jusqu'à 6% en poids du poids de PET recyclé.

14. Procédé selon l'une quelconque des revendications 6 à 13, dans lequel ladite feuille multicouche est obtenue avec une épaisseur comprise entre 0,100 mm et 1,5 mm.
